(19) Europäisches Patentamt
European Patent Office
Office européen des brevets

(11) Veröffentlichungsnummer: **0 362 318 B1**

(12) **EUROPÄISCHE PATENTSCHRIFT**

(45) Veröffentlichungstag der Patentschrift: **04.08.93**

(51) Int. Cl.[5]: **C09K 19/20**, C09K 19/30, C09K 19/12, C09K 19/14

(21) Anmeldenummer: **89902771.8**

(22) Anmeldetag: **27.02.89**

(86) Internationale Anmeldenummer:
**PCT/EP89/00180**

(87) Internationale Veröffentlichungsnummer:
**WO 89/08687 (21.09.89 89/23)**

(54) **2,3-DIFLUORBIPHENYLE.**

(30) Priorität: **10.03.88 DE 3807861**

(43) Veröffentlichungstag der Anmeldung:
**11.04.90 Patentblatt 90/15**

(45) Bekanntmachung des Hinweises auf die Patenterteilung:
**04.08.93 Patentblatt 93/31**

(84) Benannte Vertragsstaaten:
**CH DE FR GB IT LI NL**

(56) Entgegenhaltungen:
**EP-A- 0 051 738**
**EP-A- 0 258 868**
**WO-A-88/09322**
**US-A- 4 683 078**

**Patent Abstracts of Japan, vol. 11, nr. 43 (C-402) (2490) 7 February 1987; & JP-A-61 207 359**

(73) Patentinhaber: **MERCK PATENT GESELLSCHAFT MIT BESCHRÄNKTER HAFTUNG**
**Frankfurter Strasse 250 Postfach 4119**
**W-6100 Darmstadt(DE)**

(72) Erfinder: **REIFFENRATH, Volker**
**Jahnstrasse 18**
**W-6101 Rossdorf(DE)**
Erfinder: **KRAUSE, Joachim**
**Samuel-Morse-Strasse 14**
**W-6110 Dieburg(DE)**
Erfinder: **WÄCHTLER, Andreas**
**Goethestrasse 34**
**W-6103 Griesheim(DE)**
Erfinder: **WEBER, Georg**
**Wilhelm-Leuschner-Str. 38**
**W-6106 Erzhausen(DE)**
Erfinder: **FINKENZELLER, Ulrich**
**Waldpfad 74**
**W-6831 Plankstadt(DE)**
Erfinder: **COATES, David**
**87 Sopwith Crescent Merley Wimborne**
**Dorset BH21 3SW(GB)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

Erfinder: **SAGE, Ian, Charles**
**58 Wentworth Drive Broadstone**
**Dorset BH18 8EG(GB)**
Erfinder: **GREENFIELD, Simon**
**2 Blackbird Close Creekmoor**
**Poole BH17 7YA(GB)**
Erfinder: **GRAY, George, William**
**Glenwood Newgate Street Cottingham**
**North Humberside HU16 4DZ(GB)**
Erfinder: **HIRD, Michael**
**22 Anlaby Park Road South Hull**
**North Humberside HU4 7BZ(GB)**
Erfinder: **LACEY, David**
**19 Kildale Close Hull**
**North Humberside HU18 9NN(GB)**
Erfinder: **TOYNE, Kenneth, Johnson**
**25 Hall Road Hull**
**North Humberside HU6 8OW(GB)**

## Beschreibung

Die Erfindung betrifft Verbindungen der Formel I

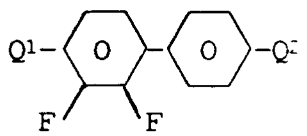

I

mit 2, 3 oder 4 Ringen
worin

| | |
|---|---|
| $Q^1$ und $Q^2$ | jeweils unabhängig voneinander R oder $R-A^1-A^2-Z$ bedeuten, wobei |
| R | jeweils unsubstituiertes, einfach durch Cyan oder mindestens einfach durch Fluor oder Chlor substituiertes Alkyl mit 1-15 C-Atomen oder Alkenyl mit 3-15 C-Atomen, worin auch jeweils eine oder zwei nicht benachbarte $CH_2$-Gruppen durch -O-, -CO-, -O-CO-, -CO-O- oder -O-COO- ersetzt sein können, |
| Z | -COO-, -O-CO-, $-CH_2O-$, $-O-CH_2-$, $-CH_2CH_2-$ oder eine Einfachbindung, und |
| $A^1$ und $A^2$ | jeweils unabhängig voneinander unsubstituiertes oder durch ein oder zwei Fluor substituiertes 1,4-Phenylen, oder trans-1,4-Cyclohexylen, und eine der beiden Gruppen $A^1$ und $A^2$ auch eine Einfachbindung sein kann, |

mit der Maßgabe, daß Z -CO-O, -O-CO-, $-CH_2O-$, $-OCH_2-$ oder $-CH_2CH_2-$ ist, falls eine der Gruppen $Q^1$ oder $Q^2$ Alkyl oder Alkoxy und die andere Gruppe $Q^1$ oder $Q^2$ $R-A^1-A^2-Z$ bedeutet, worin eine der beiden Gruppen $A^1$ und $A^2$ eine Einfachbindung ist.

Der Einfachheit halber bedeuten im folgenden Cyc eine 1,4-Cyclohexylengruppe, Phe eine 1,4-Phenylengruppe, Pyd eine Pyridin-2,5-diylgruppe, Pyr eine Pyrimidin-2,5-diylgruppe, Pyn eine Pyrazin-2,5-diylgruppe, wobei diese Gruppen unsubstituiert oder durch ein oder zwei Fluor substituiert sein können. Vorzugsweise sind diese Gruppen unsubstituiert.

$BPF_2$ bedeutet eine Gruppe der Formel

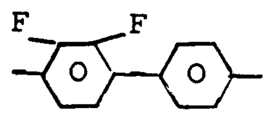

Die Verbindungen der Formel I können als Komponenten flüssigkristalliner Phasen verwendet werden, insbesondere für Displays, die auf dem Prinzip der verdrillten Zelle, dem Guest-Host-Effekt, dem Effekt der Deformation aufgerichteter Phasen oder dem Effekt der dynamischen Streuung beruhen.

Die Verbindungen der Formel I zeichnen sich durch eine deutlich negative Anisotropie der Dielektrizitätskonstante aus und werden in einem elektrischen Feld mit ihren Moleküllängsachsen senkrecht zur Feldrichtung ausgerichtet. Dieser Effekt ist bekannt und wird zur Steuerung der optischen Transparenz in verschiedenen Flüssigkristallanzeigen ausgenützt, so z.B. in Flüssigkristallzellen vom Lichtstreuungstyp (dynamische Streuung), vom sogenannten DAP-Typ (Deformation aufgerichteter Phasen) oder ECB-Typ (electrically controlled birefringence) oder vom Gast/Wirt-Typ (guest host interaction).

Weiterhin eignen sich Verbindungen der Formel I als Komponenten chiral getilteter smektischer Phasen. Chiral getiltete smektische flüssigkristalline Phasen mit ferroelektrischen Eigenschaften können hergestellt werden, in dem man Basis-Mischungen mit einer oder mehreren getilteten smektischen Phasen mit einem geeigneten chiralen Dotierstoff versetzt (L.A. Veresnev et al., Mol. Cryst. Liq. Cryst. 89, 327 (1982); H.R. Brand et al., J. Physique 44 (lett.), L-771 (1983). Solche Phasen können als Dielektrika für schnell schaltende Displays verwendet werden, die auf dem von Clark und Lagerwall beschriebenen Prinzip der SSFLC-Technologie (N.A. Clark und S.T. Lagerwall, Appl. Phys. Lett. 36, 899 (1980); USP 4,367,924) auf der Basis der ferroelektrischen Eigenschaften der chiral getilteten Phase beruhen.

Es sind bisher bereits eine Reihe von flüssigkristallinen Verbindungen mit schwach negativer dielektrischer Anisotropie synthetisiert worden. Hingegen sind noch relativ wenig Flüssigkristallkomponenten mit großer negativer Anisotropie der Dielektrizitätskonstante bekannt. Zudem weisen letztere im allgemeinen Nachteile auf, wie z.B. schlechte Löslichkeit in Mischungen, hohe Viskosität, hohe Schmelzpunkte und

chemische Instabilität. Es besteht daher ein Bedarf an weiteren Verbindungen mit negativer dielektrischer Anisotropie, die es erlauben, die Eigenschaften von Mischungen für verschiedenste elektro-optische Anwendungen weiter zu verbessern.

Flüssigkristallverbindungen mit negativer dielektrischer Anisotropie, welche zwei oder drei über Carboxylgruppen oder Kovalenzbindung verknüpfte Ringe und eine oder mehrere seitliche Gruppen, wie Halogen, Cyano oder Nitrogruppen aufweisen, sind bekannt aus DE 22 40 864, DE 26 13 293, DE 28 35 662, DE 28 36 086 und EP 023 728.

In der EP 084 194 werden in einer breiten Formel die hier beanspruchten Verbindungen umfaßt. Jedoch sind dort keine Einzelverbindungen der erfindungsgemäßen Formel genannt. Der Fachmann konnte somit aus dem Stand der Technik weder in einfacher Art und Weise Synthesemöglichkeiten für die beanspruchten Verbindungen entnehmen noch erkennen, daß die erfindungsgemäßen Verbindungen überwiegend günstig gelegene Mesophasenbereiche aufweisen und sich durch eine große negative Anisotropie der Dielektrizität bei gleichzeitiger niedriger Viskosität auszeichnen.

Auch fehlt dort jeglicher Hinweis auf die Möglichkeit des Einsatzes der erfindungsgemäßen Verbindungen in Displays, die auf der SSFLC-Technologie beruhen, da die dort beanspruchten Verbindungen geringe smektische Tendenzen aufweisen.

Weiterhin sind Dibenzoesäureester des 2,3-Dichlorhydrochinons bekannt (z.B. Bristol et al., J. Org. Chem. 39, 3138 (1974) oder Clanderman et al., J. Am. Chem. Soc. 97, 1585 (1975)), die allerdings monotrop sind bzw. sehr kleine Mesophasenbereiche aufweisen. Die von Eidenschink et al. beschriebenen Ester der 4-Hydroxy-2,3-dichlorbenzoesäure (Angew. Chem. 89, 103 (1977)) besitzen ebenfalls nur schmale Mesophasenbereiche.

Die aus der DE OS 29 33 563 bekannten 4-Alkyl-2,3-dichlorphenyl-4'-alkylbicyclohexyl-4-carbonsäureester erlauben wegen ihrer hohen Viskosität keine technische Anwendung.

Der Erfindung lag die Aufgabe zugrunde stabile, flüssigkristalline oder mesogene Verbindungen mit einer großen negativen Anisotropie der Dielektrizität und gleichzeitig geringer Viskosität aufzuzeigen.

Es wurde gefunden, daß die Verbindungen der Formel I als Komponenten flüssigkristalliner Phasen vorzüglich geeignet sind. Insbesondere sind mit ihrer Hilfe stabile flüssigkristalline Medien mit breitem Mesophasenbereich und vergleichsweise niedriger Viskosität herstellbar.

Weiterhin eignen sich die Verbindungen der Formel I als Komponenten chiral getilteter smektischer flüssigkristalliner Medien.

Mit der Bereitstellung der Verbindungen der Formel I wird außerdem ganz allgemein die Palette der flüssigkristallinen Substanzen, die sich unter verschiedenen anwendungstechnischen Gesichtspunkten zur Herstellung flüssigkristalliner Gemische eignen, erheblich verbreitert.

Die Verbindungen der Formel I besitzen einen breiten Anwendungsbereich. In Abhängigkeit von der Auswahl der Substituenten können diese Verbindungen als Basismaterialien dienen, aus denen flüssigkristalline Phasen zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie und/oder die Viskosität und/oder die spontane Polarisation und/oder die Phasenbereiche und/oder den Tiltwinkel und/oder den Pitch eines solchen Dielektrikums zu varriieren.

Die Verbindungen der Formel I eignen sich ferner als Zwischenprodukte zur Herstellung anderer Substanzen, die sich als Bestandteile flüssigkristalliner Dielektrika verwenden lassen.

Die Verbindungen der Formel I sind in reinem Zustand farblos und bilden flüssigkristalline Mesophasen in einem für die elektrooptische Verwendung günstig gelegenen Temperaturbereich. Chemisch, thermisch und gegen Licht sind sie sehr stabil.

Gegenstand der Erfindung sind somit die Verbindungen der Formel I, insbesondere die Verbindungen der Formel Ia und Ib,

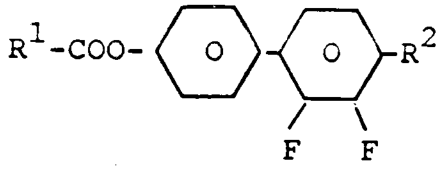

Ia

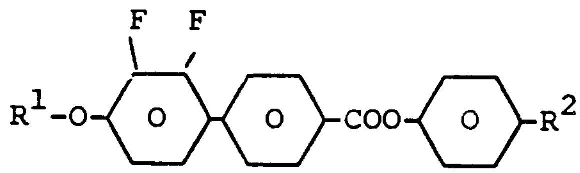

Ib

worin $R^1$ und $R^2$ jeweils unabhängig voneinander Alkyl mit 1-15 C Atomen bedeuten.

Weiterhin Zwischenprodukte der Formeln Ic und Id,

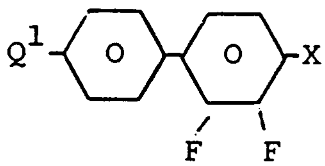

Ic

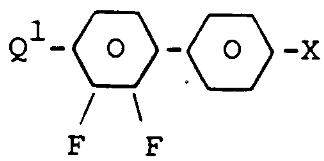

Id

worin $Q^1$ die angegebene Bedeutung besitzt und X OH, COOH oder Halogen bedeutet.

Sowie ein Verfahren zur Herstellung der Verbindungen der Formeln I, Ia und Ib, dadurch gekennzeichnet, daß man eine entsprechende Carbonsäure oder eines ihrer reaktionsfähigen Derivate mit einer entsprechenden Hydroxyverbindung oder einem seiner reaktionsfähigen Derivate umsetzt.

Weiterhin ist Gegenstand der Erfindung die Verwendung der Verbindungen der Formel I als Komponenten flüssigkristalliner Medien. Gegenstand der Erfindung sind ferner flüssigkristalline Medien mit einem Gehalt an mindestens einer Verbindung der Formel I, sowie Flüssigkristall-Anzeigeelemente, die derartige Medien enthalten. Derartige Phasen weisen besonders vorteilhafte elastische Konstanten auf, und eignen sich wegen ihrer niedrigen $\Delta\epsilon/\epsilon_\perp$, -Werte besonders für TFT-Mischungen.

Vor- und nachstehen haben $Q^1$, $Q^2$, $A^1$, $A^2$ , R und Z die angegebene Bedeutung, sofern nicht ausdrücklich etwas anderes vermerkt ist.

Die Verbindungen der Formel I umfassen dementsprechend bevorzugte Verbindungen der Teilformel Ie (mit zwei Ringen), Teilformeln If bis Ii (mit drei Ringen) und Ij bis In (mit vier Ringen):

$R\text{-}BPF_2\text{-}R$ Ie

$R\text{-}A^1\text{-}BPF_2\text{-}R$ If

$R\text{-}BPF_2\text{-}A^1\text{-}R$ Ig

$R\text{-}A^1\text{-}Z\text{-}BPF_2\text{-}R$ Ih

$R\text{-}BPF_2\text{-}Z\text{-}A^1\text{-}R$ Ii

R-$A^1$-$BPF_2$-$A^1$-R Ij

R-$A^1$-Z-$BPF_2$-$A^1$-R Ik

R-$A^1$-$BPF_2$-Z-$A^1$-R Il

R-$A^1$-$A^2$-$BPF_2$-R Im

R-$BPF_2$-$A^1$-$A^2$-R In

Darunter sind diejenigen der Teilformeln Ia bis Ih bevorzugt.
Von den Verbindungen der Formel Ih sind die der Formeln Ih1 und Ih2 besonders bevorzugt

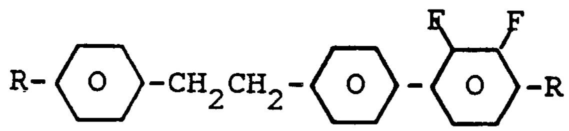

Ih1

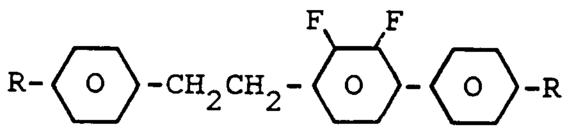

Ih2

In den Verbindungen der vor- und nachstehenden Formeln bedeutet R jeweils unabhängig voneinander vorzugsweise Alkyl oder Alkoxy.

Weiterhin bevorzugt sind Verbindungen der vor- und nachstehenden Formeln, in denen einer der Reste R Alkenyl oder Oxaalkyl (z.B. Alkoxymethyl) bedeutet.

$A^1$ und $A^2$ sind bevorzugt unsubstituiertes 1,4-Phenylen, Cyc, Pyd oder Pyr; bevorzugt enthält die Verbindung der Formel I nicht mehr als jeweils einen der Reste Pyd, Pyn, Pyr oder 2,3-Difluor-1,4-phenylen.

Die Reste R weisen in den vor- und nachstehenden Formeln vorzugsweise 2-12 C-Atome, insbesondere 3-10 C-Atome auf. In R können auch eine oder zwei $CH_2$-Gruppen ersetzt sein. Vorzugsweise ist nur eine $CH_2$-Gruppe ersetzt durch -O-, oder -CH=CH-.

In den vor- und nachstehenden Formeln bedeuten die Reste R vorzugsweise Alkyl, Alkoxy oder eine andere Oxaalkylgruppe, ferner auch Alkylgruppen, in denen eine oder zwei $CH_2$-Gruppen durch -CH=CH- ersetzt sein können.

Falls die Reste R Alkylreste, in denen auch eine ("Alkoxy" bzw. "Oxaalkyl") oder zwei ("Alkoxylalkoxy" bzw. "Dioxaalkyl") nicht benachbarte $CH_2$-Gruppen durch O-Atome ersetzt sein können, bedeuten, so können sie geradkettig oder verzweigt sein. Vorzugsweise sind sie geradkettig, haben 2, 3, 4, 5, 6 oder 7 C-Atome und bedeuten demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3- oder 4-Oxapentyl, 2-, 3-, 4-oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl, 1,3-Dioxabutyl (= Methoxymethoxy), 1,3-, 1,4-, 2,4-Dioxapentyl, 1,3-, 1,4-, 1,5-, 2,4-, 2,5- oder 3,5-Dioxahexyl, 1,3-, 1,4-, 1,5-, 1,6-, 2,4-, 2,5-, 2,6-, 3,5-, 3,6- oder 4,6-Dioxaheptyl.

Falls die Reste R einen Alkylrest bedeuten, in dem eine $CH_2$-Gruppe durch -CH = CH- ersetzt ist, so ist die trans-Form bevorzugt. Dieser Alkenylrest kann geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Verbindungen der Formel I mit verzweigten Resten R können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugte verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy, 2-Oxa-3-methylbutyl, 3-Oxa-4-methylpentyl, 4-Methylhexyl, 2-Nonyl, 2-Decyl, 2-Dodecyl, 6-Methyloctoxy, 6-Methyloctanoyloxy, 2-Methylbutyryloxy, 3-Methylvaleryloxy, 5-Methylheptyloxycarbonyl, 4-Methylhexanoyloxy, 2-Chlorpropionyloxy, 2-Chlor-3-methylbutyryloxy, 2-Chlor-4-methylvaleryloxy, 2-Chlor-3-methylvaleryloxy, 2-Methyloxapentyl, 2-Methyloxahexyl, 2-Fluor-3-methylvaleryloxy, 2-Fluor-3-methylbutyloxy.

Formel I umfaßt sowohl die Racemate dieser Verbindungen als auch die optischen Antipoden sowie deren Gemische.

Unter den Verbindungen der Formeln I sowie Ia bis In sind diejenigen bevorzugt, in denen mindestens einer der darin enthaltenen Reste eine der angegebenen bevorzugten Bedeutungen hat.

Die Verbindungen der Formel I werden nach an sich bekannten Methoden hergestellt, wie sie in der Literatur (z. B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Ausgangsstoffe können gewünschtenfalls auch in situ gebildet werden, derart, daß man sie aus dem Reaktionsgemisch nicht isoliert, sondern sofort weiter zu den Verbindungen der Formel I umsetzt.

Verbindungen der Formel I sind ausgehend von 1,2-Difluorbenzol zugänglich. Dieses wird nach bekanntem Verfahren (z.B. A.M. Roe et al., J. Chem. Soc. Chem. Comm., 22, 582 (1965)) metalliert und mit dem entsprechendem Elektrophil umgesetzt. Mit dem so erhaltenen 1-substituierten 3,3-Difluorbenzol läßt sich diese Reaktionssequenz ein zweites Mal mit einem geeigneten Elektrophil durchführen und man gelangt so zu 1,4-disubstituierten 2,3-Difluorbenzolen, die ggf. in weiteren Reaktionsschritten in die Endprodukte überführt werden können. 1,2-Difluorbenzol bzw. 1-substituiertes 2,3-Difluorbenzol wird in einem inerten Lösungsmittel wie Diethylether, Tetrahydrofuran, Dimethoxyethan, tert-Butylmethylether oder Dioxan, Kohlenwasserstoffen wie Hexan, Heptan, Cyclohexan, Benzol oder Toluol oder Gemischen dieser Lösungsmittel gegebenenfalls unter Zusatz eine Komplexierungsmittels wie Tetramethylethylendiamin (TMEDA) oder Hexamethylphosphorsäuretriamid mit Phenyllithium, Lithiumtetramethylpiperidin, n-, sek- oder tert-Butyllithium bei Temperaturen von -100 °C bis +50 °C vorzugsweise -78 °C bis 0 °C umgesetzt.

Die Lithium-2,3-difluorphenyl-Verbindungen werden bei -100 °C bis 0 °C vorzugsweise bei -50 °C mit den entsprechenden Elektrophilen umgesetzt. Geeignete Elektrophile sind Aldehyde, Ketone, Nitrile, Epoxide, Carbonsäure-Derivate wie Ester, Anhydride oder Halogenide, Halogenameisensäureester oder Kohlendioxid.

Zur Umsetzung mit aliphatischen oder aromatischen Halogen-Verbindungen werden die Lithium-2,3-difluorphenyl-Verbindungen transmetalliert und unter Übergangsmetallkatalyse gekoppelt. Besonders geeignet sind hierfür die Zink- (vgl. DE OS 36 32 410) oder die Titan-2,3-difluorphenyl-Verbindungen (vgl. DE OS 37 36 489).

Die 2,4-Difluorbiphenyle können beispielsweise hergestellt werden, indem man eine Verbindung, die an Stelle von C-C-Bindungen H-Atome enthält, mit einem oxidierenden Mittel behandelt.

Als oxidierbare Gruppen kommen vorzugsweise Cyclohexenringe in Betracht. Bevorzugte Ausgangsstoffe für die Oxidation entsprechen der Formel

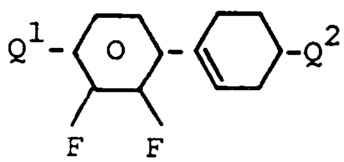

und werden durch Oxidation (Dehydrierung) nach Standardmethoden in die erfindungsgemäßen Verbindungen überführt.

Die Oxidation kann z.B. durch katalytische Dehydrierung erfolgen.

Bevorzugt sind jedoch Dehydrierung mit 2,3-Dichlor-5,6-dicyan-p-benzochinon(DDQ), Chloranil, Schwefel oder Selen wegen der milderen Reaktionsbedingungen.

Die erfindungsgemäßen Ester können durch Veresterung entsprechender Carbonsäuren (oder ihrer reaktionsfähigen Derivate) mit Alkoholen bzw. Phenolen (oder ihren reaktionsfähigen Derivaten) erhalten werden.

Als reaktionsfähige Derivate der genannten Carbonsäuren eignen sich insbesondere die Säurehalogenide, vor allem die Chloride und Bromide, ferner die Anhydride, z. B. auch gemischte Anhydride, Azide oder Ester, insbesondere Alkylester mit 1-4 C-Atomen in der Alkylgruppe.

Als reaktionsfähige Derivate der genannten Alkohole bzw. Phenole kommen insbesondere die entsprechenden Metallalkoholate bzw. Phenolate, vorzugsweise eines Alkalimetalls wie Na oder K, in Betracht.

Die Veresterung wird vorteilhaft in Gegenwart eines inerten Lösungsmittels durchgeführt. Gut geeignet sind insbesondere Ether wie Diethylether, Di-n-butylether, THF, Dioxan oder Anisol, Ketone wie Aceton, Butanon oder Cyclohexanon, Amide wie DMF oder Phosphorsäure-hexamethyltriamid, Kohlenwasserstoffe wie Benzol, Toluol oder Xylol, Halogenkohlenwasserstoffe wie Tetrachlorkohlenstoff oder Tetrachlorethylen und Sulfoxide wie Dimethylsulfoxid oder Sulfolan. Mit Wasser nicht mischbare Lösungsmittel können gleichzeitig vorteilhaft zum azeotropen Abdestillieren des bei der Veresterung gebildeten Wassers verwendet werden. Gelegentlich kann auch ein Überschuß einer organischen Base, z.B. Pyridin, Chinolin oder Triethylamin als Lösungsmittel für die Veresterung angewandt werden. Die Veresterung kann auch in Abwesenheit eines Lösungsmittels, z.B. durch einfaches Erhitzen der Komponenten in Gegenwart von Natriumacetat, durchgeführt werden. Die Reaktionstemperatur liegt gewöhnlich zwischen -50 ° und +250 °, vorzugsweise zwischen -20 ° und +80 °. Bei diesen Temperaturen sind die Veresterungsreaktionen in der Regel nach 15 Minuten bis 48 Stunden beendet.

Im einzelnen hängen die Reaktionsbedingungen für die Veresterung weitgehend von der Natur der verwendeten Ausgangsstoffe ab. So wird eine freie Carbonsäure mit einem freien Alkohol oder Phenol in der Regel in Gegenwart einer starken Säure, beispielsweise einer Mineralsäure wie Salzsäure oder Schwefelsäure, umgesetzt. Eine bevorzugte Reaktionsweise ist die Umsetzung eines Säureanhydrids oder insbesondere eines Säurechlorids mit einem Alkohol, vorzugsweise in einem basischen Milieu, wobei als Basen insbesondere Alkalimetallhydroxide wie Natrium- oder Kaliumhydroxid, Alkalimetallcarbonate bzw. -hydrogencarbonate wie Natriumcarbonat, Natriumhydrogencarbonat, Kaliumcarbonat oder Kaliumhydrogencarbonat, Alkalimetallacetate wie Natrium- oder Kaliumacetat, Erdalkalimetallhydroxide wie Calciumhydroxid oder organische Basen wie Triethylamin, Pyridin, Lutidin, Collidin oder Chinolin von Bedeutung sind. Eine weitere bevorzugte Ausführungsform der Veresterung besteht darin, daß man den Alkohol bzw. das Phenol zunächst in das Natrium- oder Kaliumalkoholat bzw. -phenolat überführt, z.B. durch Behandlung mit ethanolischer Natron- oder Kalilauge, dieses isoliert und zusammen mit Natriumhydrogencarbonat oder Kaliumcarbonat unter Rühren in Aceton oder Diethylether suspendiert und diese Suspension mit einer Lösung des Säurechlorids oder Anhydrids in Diethylether, Aceton oder DMF versetzt, zweckmäßig bei Temperaturen zwischen etwa -25 ° und +20 °.

Erfindungsgemäße Ether sind durch Veretherung entsprechender Hydroxyverbindungen, vorzugsweise entsprechender Phenole, erhältlich, wobei die Hydroxyverbindung zweckmäßig zunächst in ein entsprechendes Metallderivat, z.B. durch Behandeln mit NaH, $NaNH_2$, NaOH, KOH, $Na_2CO_3$ oder $K_2CO_3$ in das entsprechende Alkalimetallalkoholat oder Alkalimetallphenolat übergeführt wird. Dieses kann dann mit dem entsprechenden Alkylhalogenid, -sulfonat oder Dialkylsulfat umgesetzt werden, zweckmäßig in einem inerten Lösungsmittel wie Aceton, 1,3-Dimethoxyethan, DMF oder Dimethylsulfoxid oder auch einem Überschuß an wäßriger oder wäßrig-alkoholischer NaOH oder KOH bei Temperaturen zwischen etwa 20 ° und 100 °C.

Die erfindungsgemäßen flüssigkristallinen Medien enthalten vorzugsweise neben einer oder mehreren erfindungsgemäßen Verbindungen als weitere Bestandteile 2 bis 40, insbesondere 4 bis 30 Komponenten. Ganz besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexan-carbonsäurephenyl- oder cyclohexyl-ester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexene, Cyclohexylcyclohexylcyclohexene, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cyclohexyldioxane, Phenyl- oder

Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylylethane, 1-Phenyl-2-cyclohexylphenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile erfindungsgemäßer Medien in Frage kommenden Verbindungen lassen sich durch die Formeln 1, 2, 3, 4 und 5 charakterisieren:

R'-L-E-R" 1

R'-L-COO-E-R" 2

R'-L-OOC-E-R" 3

R'-L-$CH_2CH_2$-E-R" 4

R'-L-C≡C-E-R" 5

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Rest L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R" bedeuten in den Verbindungen der Teilformeln 1a, 2a, 3a, 4a und 5a jeweils unabhängig voneinander Alkyl, Alkenyl, Alkoxy, Alkenyloxy oder Alkanoyloxy mit bis zu 8 Kohlenstoffatomen. Bei den meisten dieser Verbindungen sind R' und R" voneinander verschieden, wobei einer dieser Reste meist Alkyl oder Alkenyl ist. In den Verbindungen der Teilformeln 1b, 2b, 3b, 4b und 5b bedeutet R" -CN, $-CF_3$, F, Cl oder -NCS; R hat dabei die bei den Verbindungen der Teilformeln 1a bis 5a angegebene Bedeutung und ist vorzugsweise Alkyl oder Alkenyl. Aber auch andere Varianten der vorgesehenen Substituenten in den Verbindungen der Formeln 1, 2, 3, 4 und 5 sind gebräuchlich. Viele solcher Substanzen oder auch Gemische davon sind im Handel erhältlich. Alle diese Substanzen sind nach literaturbekannten Methoden oder in Analogie dazu erhältlich.

Die erfindungsgemäßen Medien enthalten vorzugsweise neben Komponenten aus der Gruppe der Verbindungen 1a, 2a, 3a, 4a und 5a (Gruppe 1) auch Komponenten aus der Gruppe der Verbindungen 1b, 2b, 3b, 4b und 5b (Gruppe 2), deren Anteile vorzugsweise wie folgt sind:

Gruppe 1: 20 bis 90 %, insbesondere 30 bis 90 %,
Gruppe 2: 10 bis 80 %, insbesondere 10 bis 50 %,
wobei die Summe der Anteile der erfindungsgemäßen Verbindungen und der Verbindungen aus den Gruppen 1 und 2 bis zu 100 % ergeben.

Die erfindungsgemäßen Medien enthalten vorzugsweise 1 bis 40 %, insbesondere vorzugsweise 5 bis 30 % an erfindungsgemäßen Verbindungen. Weiterhin bevorzugt sind Medien, enthaltend mehr als 40 %, insbesondere 45 bis 90 % an erfindungegemäßen Verbindungen. Die Medien enthalten vorzugsweise drei, vier oder fünf erfindungsgemäße Verbindungen.

Die Herstellung der erfindungsgemäßen Medien erfolgt in an sich üblicher Weise. In der Regel werden die Komponenten ineinander gelöst, zweckmäßig bei erhöhter Temperatur. Durch geeignete Zusätze können die flüssigkristallinen Phasen nach der Erfindung so modifiziert werden, daß sie in allen bisher bekannt gewordenen Arten von Flüssigkristallanzeigeelementen verwendet werden können. Derartige Zusätze sind dem Fachmann bekannt und in der Literatur ausführlich beschrieben (H. Kelker/R. Hatz, Handbook of Liquid Crystals, Verlag Chemie, Weinheim, 1980). Beispielsweise können pleochroitische Farbstoffe zur

Herstellung farbiger Guest-Host-Systeme oder Substanzen zur Veränderung der dielektrischen Anisotropie, der Viskosität und/oder der Orientierung der nematischen Phasen zugesetzt werden.

Die folgenden Beispiele sollen die Erfindung erläutern, ohne sie zu begrenzen. mp. = Schmelzpunkt, cp. = Klärpunkt. Vor- und nachstehend bedeuten Prozentangaben Gewichtsprozent; alle Temperaturen sind in Grad Celsius angegeben. "Übliche Aufarbeitung" bedeutet: man gibt Wasser hinzu, extrahiert mit Methylenchlorid, trennt ab, trocknet die organische Phase, dampft ein und reinigt das Produkt durch Kristallisation und/oder Chromatographie.

Es bedeuten ferner:

K: Kristallin-fester Zustand, S: smektische Phase (der Index kennzeichnet den Phasentyp), N: nematischer Zustand, Ch: cholesterische Phase, I: isotrope Phase. Die zwischen zwei Symbolen stehende Zahl gibt die Umwandlungstemperatur in Grad Celsius an.

Beispiel 1

39 g 1-(4-Ethoxy-2,3-difluorphenyl)-4-(trans-4-n propylcyclohexylethyl)-cyclohex-1-en (wie folgt erhältlich: Unter Feuchtigkeitsausschluß und Stickstoffatmosphäre werden zu einer Lösung von 31,6 g Ethoxy-2,3-difluorbenzol und 23,2 g Tetramethylethylendiamin (TMEDA) in 400 ml Tetrahydrofuran (THF) bei -70 °C 131 ml einer 1,6 n Lösung von Butyllithium (BuLi) in n-Hexan getropft. Anschließend rührt man 4 Stunden bei -70 °C und gibt dann langsam 50 g 4-(trans-4-n-Propylcyclohexylethyl)-cyclohexanon in 100 ml THF zu. Man läßt das Reaktionsgemisch langsam auf Raumtemperatur erwärmen und hydrolysiert mit 1,5 l einer gesättigten Ammoniumchloridlösung. Das Gemisch wird mit Ether extrahiert und die Etherphase mehrmals mit Wasser gewaschen, getrocknet und eingedampft. Der Rückstand wird in 700 ml Ethanol aufgenommen, mit 70 ml konz-HCl versetzt und 3 Stunden am Rückfluß gekocht. Anschließend gibt man 1,5 l Wasser hinzu, extrahiert mit Methyl-tert.-butyl-Ether. Die Etherphase wird neutral gewaschen, getrocknet und eingedampft und der Rückstand umkristallisiert. Das Produkt (mp. 73°, cp. 139°) und 50 g DDQ werden in 250 ml Toluol eine Stunde am Rückfluß gekocht. Nach dem Abkühlen wird die Reaktionsmischung mit Toluol über Kieselgel filtriert, das Filtrat eingedampft und der Rückstand chromatographisch gereinigt. Man erhält 1-(trans-4-Propylcyclohexyl)-2-(4'-ethoxy-2',3'-difluorbiphenyl-4-yl)-ethan, mp. 64°, cp. 144°.

Beispiel 2

Unter Feuchtigkeitsausschluß und Stickstoffatmosphäre werden zu einer Lösung von 0,2 mol trans-4-n-Propylcyclohexylethyl-2,3-difluorbenzol (herstellbar durch Alkylierung von 2,3-Difluorbenzol mit trans-4-n-Propylcyclohexylethyljodid bei -85 °C in Gegenwart von BuLi/Kaliumtertiärbutylat(t-BuOK)/1,3-Dimethyltetrahydro-2-(1H)-pyrimidinon (DMPU) und 0,2 mol TMEDA in 400 ml THF bei -70 °C, 0,21 mol einer 1,6 n Lösung von n-BuLi in Hexan getropft. Man rührt 4 Stunden bei -70 ° und gibt dann 0,2 mol 4-Pentyloxycyclohexanon zu. Man läßt das Reaktionsgemisch auf Raumtemperatur erwärmen und hydrolysiert dann mit verdünnter HCl und isoliert das Produkt wie üblich. Das Produkt wird in Toluol aufgenommen und in Gegenwart von p-Toluolsulfonsäure am Wasserabscheider zum Sieden erhitzt. Danach wäscht man die Toluolphase mit Wasser neutral, trocknet sie und gibt 0,4 mol DDQ zu. Man bringt das Reaktionsgemisch zum Sieden. Nachdem die Reaktion beendet ist, filtriert man das Gemisch über eine Kieselgelsäule und arbeitet dann wie üblich auf. Das Produkt wird durch Kristallisation und Chromatographie gereinigt. Man erhält 1-(trans-4-Propyl-cyclohexyl)-2-(4'-pentyloxy-2,3-difluorbiphenyl-4-yl)-ethan.

Analog wurden hergestellt:

1-(trans-Pentylcyclohexyl)-2-(4'-pentyl-2,3-difluorbiphenyl-4-yl)-ethan, mp. 27°, cp. 107°

Beispiel 3

0,2 mol trans-4-n Pentylcyclohexylethyl-2,3-difluorbenzol werden unter Feuchtigkeitsausschluß und Stickstoffatmosphäre in 500 ml THF bei -70 °C mit 0,2 mol TMEDA und 131 ml einer 1,6 n Lösung von BuLi in Hexan umgesetzt und 4 Stunden bei -70 °C gerührt. Danach gibt man langsam 50 g 4-(trans-4-n Propylcyclohexylethyl)cyclohexanon gelöst in 100 ml THF zu. Man läßt das Reaktionsgemisch langsam auf Raumtemperatur erwärmen, hydrolysiert mit verdünnter HCl und arbeitet dann wie üblich auf. Das so erhaltene Produktgemisch wird in Toluol aufgenommen und zusammen mit etwas p-Toluolsulfonsäure am Wasserabscheider zum Sieden erhitzt. Man arbeitet wie üblich auf und erhitzt das Produkt zusammen mit der doppelten molaren Menge DDQ in Toluol 2 Stunden lang am Rückfluß. Dann filtriert man das Reaktionsgemisch über Kieselgel, dampft das Filtrat ein und kristallisiert den Rückstand um. Man erhält 4-(trans-4-Pentylcyclohexylethyl)-4'-(trans-4-propylcyclohexylethyl)-2,3-difluorbiphenyl.

Beispiel 4

Zu 0,1 mol 4'-Pentyl-2,3-difluorbiphenyl-4-ol (herstellbar aus 4'-Pentyl-2,3-difluor-4-methoxy-biphenyl durch Etherspaltung mit HBr/Eisessig), 0,1 mol trans-4-n Pentylcyclohexancarbonsäureund einer katalytischen Menge 4-N, N'-Dimethylaminopyridin (DMAP) in 300 ml $CH_2Cl_2$ gibt man unter Ausschluß von Feuchtigkeit bei 0 °C 0,1 mol Dicyclohexylcarbodiimid (DCC) gelöst in $CH_2Cl_2$. Man rührt anschließend 12 Stunden bei Raumtemperatur, trennt den ausgefallenen Dicyclohexylharnstoff ab und arbeitet wie üblich auf. Das Produkt wird durch Kristallisation gereinigt. Man erhält trans-4-n-Pentylcyclohexancarbonsäure-(4'-pentyl-2,3-difluorbiphenyl-4-yl-ester).

Beispiel 5

0,1 mol 4'-n-Pentyl-2,3-difluorbiphenyl-4-ol und 0,1 mol trans-4-n-Pentylcyclohexylmethyljodid werden in Gegenwart von 0,12 mol wasserfreiem $K_2CO_3$ in Dimethylformamid (DMF) zum gelinden Sieden erhitzt. Nachdem die Umsetzung abgeschlossen ist, wird wie üblich aufgearbeitet und das Produkt durch Chromatographie und Kristallisation gereinigt. Man erhält (trans-4-n-Pentylcyclohexylmethyl)-(4'-pentyl-2,3-difluor biphenyl-4-yl)-ether, K (58° $S_C$) 30° $S_A$ 72° N 116° I

Analog werden hergestellt:
(trans-4-n-Pentylcyclohexylmethyl)-(4'-propyl-2,3-difluorbiphenyl-4-yl)-ether
(trans-4-n-Propylcyclohexylmethyl)-(4'-propyl-2,3-difluorbiphenyl-4-yl)-ether
(trans-4-n-Propylcyclohexylmethyl)-(4'-heptyl-2,3-difluorbiphenyl-4-yl)-ether
(trans-4-n-Heptylcyclohexylmethyl)-(4'-heptyl-2,3-difluorbiphenyl-4-yl)-ether
(trans-4-n-Octylcyclohexylmethyl)-(4'-pentyl-2,3-difluorbiphenyl-4-yl)-ether, K 57° $S_A$ 97° N 110° I

Beispiel 6

0,1 mol Octyloxy-2,3-difluorbenzol wird bei -70 °C in 200 ml THF in Gegenwart von 0,1 mol TMEDA mit 0,105 mol einer 1,6 n Lösung von BuLi in Hexan metalliert und nach 3 Stunden bei -70 °C mit 0,1 mol 4-Hexylcyclohexanon umgesetzt. Man läßt das Reaktionsgemisch auf Raumtemperatur erwärmen, hydrolysiert mit gesättigter $NH_4Cl$-Lösung, extrahiert mit MTB-Ether und arbeitet wie üblich auf. Das Produktgemisch wird in Toluol aufgenommen und in Gegenwart von 2 g p-Toluolsulfonsäure am Wasserabscheider gekocht. Anschließend wird die Toluollösung mit Wasser neutral gewaschen, getrocknet und mit 0,2 mol DDQ versetzt. Man kocht 3 Stunden am Rückfluß und gibt dann das abgekühlte Reaktionsgemisch über eine kurze Kieselgelsäule. Das Produkt wird durch Kristallisation gereinigt. Man erhält 4'-Heptyl-2,3-difluor-4-octyloxybiphenyl.

Analog werden hergestellt:
4'-Pentyl-2,3-difluor-4-methoxybiphenyl,
4'-Octyl-2,3-difluor-4-octyloxybiphenyl,
4'-Nonyl-2,3-difluor-4-nonyloxybiphenyl,
4'-Pentyl-2,3-difluoroctyloxybiphenyl, K 18° N 22,6° I

Beispiel 7

13,6 g p-Propylphenol und 32 g 2,3-Difluor-4-pentyloxybiphenyl-4'-carbonsäure (Herstellung von 4-Pentyloxy-2,3-difluorbiphenyl-4'-carbonsäure: Pentyloxy-2,3-difluorbenzol wird unter den üblichen Bedingungen bei -70 °C in THF mit einer äquimolaren Menge Butyllithium und TMEDA metalliert, dann wird das Reaktionsgemisch 4 Stunden bei -70 °C gerührt und bei der gleichen Temperatur mit äquimolarer Menge Chlortriisopropylorthotitanat umgesetzt. Man läßt das Reaktionsgemisch langsam auf -30 °C erwärmen und gibt dann eine äquimolare Menge Cyclohexanon-4-carbonsäureethylester hinzu und rührt unter langsamer Erwärmung auf Raumtemperatur 12 Stunden lang. Das Reaktionsgemisch wird mit eiskalter verdünnter Salzsäure hydrolysiert, kurz gerührt und über Celite filtriert. Das Filtrat wird mit MTB-Ether extrahiert, die organische Phase wird getrocknet und eingedampft. Der Rückstand wird in Ethanol aufgenommen mit etwas Salzsäure versetzt und 12 Stunden am Rückfluß gekocht. Das Produkt wird nach Zugabe von Wasser wie üblich isoliert und zusammen mit der doppelten molaren Menge DDQ in Toluol zum Sieden erhitzt. Anschließend wird wie üblich aufgearbeitet und der Ester bei Raumtemperatur mit einem kleinen Überschuß an ethanolischer KOH verseift. Die Säure wird durch Kristallisation gereinigt.) werden in 250 ml Methylenchlorid zusammen mit einer katalytischen Menge DMAP vorgelegt und bei 0 °C eine Lösung von 0,1 Mol DCC in Methylenchlorid zugetropft. Man läßt das Reaktionsgemisch 12 Stunden lang bei Raumtemperatur rühren, saugt dann den ausgefallenen Dicyclohexylharnstoff ab und arbeitet die organische Phase wie üblich auf. Man erhält 4-Pentyloxy-2,3-difluorbiphenyl-4'-ylcarbonsäure-(p-propylphenylester).

Analog werden hergestellt:

4-Pentyloxy-2,3-difluorbiphenyl-4'-ylcarbonsäure-(p-hexylphenylester)
4-Heptyloxy-2,3-difluorbiphenyl-4'-ylcarbonsäure-(p-hexylphenylester)
4-Octyloxy-2,3-difluorbiphenyl-4'-ylcarbonsäure-(p-hexylphenylester)
4-Nonyloxy-2,3-difluorbiphenyl-4'-ylcarbonsäure-(p-hexylphenylester)
4-Octyloxy-2,3-difluorbiphenyl-4'-ylcarbonsäure-(p-heptylphenylester)
4-Octyloxy-2,3-difluorbiphenyl-4'-ylcarbonsäure-(p-octylphenylester),$K_1$ 58,6° $K_2$ 63,6° $S_C$ 121° $S_A$ 139,1° N 144,5° I
4-Octyloxy-2,3-difluorbiphenyl-4'-ylcarbonsäure-(p-nonylphenylester)
4-Octyloxy-2,3-difluorbiphenyl-4'-ylcarbonsäure-(p-hexyloxyphenylester)
4-Octyloxy-2,3-difluorbiphenyl-4'-ylcarbonsäure(p-heptyloxyphenylester
4-Octyloxy-2,3-difluorbiphenyl-4'-ylcarbonsäure-(p-octyloxyphenylester), K 83,8° $S_C$ 151,7° $S_A$ 154,9° N 165,4° I
4-Octyloxy-2,3-difluorbiphenyl-4'-ylcarbonsäure-(4-octyl-3-fluorphenylester),
4-Octyloxy-2,3-difluorbiphenyl-4'-ylcarbonsäure-(4-octyl-2-fluorphenylester), K 45,2° $S_C$ 84,3° N 120,7° I
4-Octyloxy-2,3-difluorbiphenyl-4'-ylcarbonsäure-(4-octyloxy-2-fluorphenylester), K 56,7° $S_C$ 103° N 141,6° I
Heptyl-2,3-difluorphenyl-4'-ylcarbonsäure-(4-heptyl-2-fluorphenylester), K < 20° N 83,4° I
4-Octyloxy-2,3-difluorbiphenyl-4'-ylcarbonsäure-(trans-4-pentylcyclohexylester) K (67.8° $S_C$) 81,6° $S_A$ 97,5° N 132,4° I
4-Octyloxy-2,3-difluorbiphenyl-4'-ylcarbonsäure-(4-heptyl-3-fluorphenylester), K 44,7° $S_C$ (41°) $S_A$ 146° I
4-Octyloxy-2,3-difluorbiphenyl-4'-ylcarbonsäure-(4-octyloxy-3-fluorphenylester), K 83,6° $S_C$ 116° $S_A$ 162,9° I

Beispiel 8

Eine Mischung von 0,0055 mol 4'-Octyloxy-2',3'-difluorbiphenyl-4-ol (hergestellt durch hydrogenolytische Spaltung von 4'-Octyloxy-2',3'-difluor-4-benzyloxybiphenyl, welches durch Kopplung von (4-Octyloxy-2,3-difluorphenyl)diisopropyloxytitanat an p-Benzyloxy-brombenzol mit Tetrakis(triphenylphosphin)palladium (O) als Katalysator erhalten wird), 20 ml Dichlormethan und 1 ml Triethylamin wird mit 0,0055 mol 4-Octylbicyclo[2,2,2]octylcarboxylchlorid versetzt. Nach 24stündigem Rühren bei 20 °C erhält man nach üblicher Aufarbeitung 4'-Octyloxy-2',3'-difluorbiphenyl-4-yl 4-octylbicyclo[2,2,2]octylcarboxylat, K 57,1° $S_C$ 128,5° $S_A$ 156° N 177,5° I.

Analog werden hergestellt:

4'-Octyloxy-2',3'-difluorbiphenyl-4-yl trans-4-heptylcyclohexylcarboxylat, K 53° $S_C$ 132,8° $S_A$ 144,4° N 162° I
4'-Octyloxy-2,3-difluorbiphenyl-4-yl trans-4-heptylcyclohexylcarboxylat
4'-Octyloxy-2',3'-difluorbiphenyl-4-yl trans-4-hexylcyclohexylcarboxylat K 45° $S_c$ 129° $S_A$ 135,7° N 166,3° I
4'-Octyloxy-2',3'-difluorbiphenyl-4-yl trans-4-octylcyclohexylcarboxylat K 56° $S_c$ 133,6° $S_A$ 147° N 157° I
4'-Octyloxy-2',3'-difluor-4-acetyloxybiphenyl
4'-Octyloxy-2',3'-difluor-4-propionyloxybiphenyl
4'-Octyloxy-2',3'-difluor-4-butyryloxybiphenyl
4'-Octyloxy-2',3'-difluor-4-pentanoyloxybiphenyl
4'-Octyloxy-2',3'-difluor-4-hexanoyloxybiphenyl
4'-Octyloxy-2',3'-difluor-4-heptanoyloxybiphenyl, K 62,9° I
4'-Octyloxy-2',3'-difluor-4-octanoyloxybiphenyl, K 54,9° $S_C$ 63,0° N 66,5° I
4'-Octyloxy-2',3'-difluor-4-nonanoyloxybiphenyl, K 58° $S_C$ 63,1° N 63,5° I
4'-Octyloxy-2',3'-difluor-4-(4-methylhexanoyloxy)-biphenyl K 38° $S_C$ (32,5°) N (35,5°) I
4'-Octyloxy-2',3'-difluor-4-decanoyloxybiphenyl, K 51,8° $S_C$ 71° I

Beispiel 9

Zu einem Gemisch aus 0,1 mol 4'-n-Pentyl-2,3-difluorbiphenyl (hergestellt aus 1,2-Difluorbenzol und 4-Pentylcyclohexanon analog Beispiel 3), in 250 ml THF und 0,1 mol Kalium tert. butylat werden bei -90 °C 0, 15 mol einer Lösung von n-Buli in Hexan zugestropft. Nach 10 minütigem Rühren bei -85 °C tropft man 0,1 mol 1-(4-Propylphenyl)-2-jodethan gelöst in 50 ml THF und 2 ml DMPU hinzu. Mach Aufwärmen auf -40 °C und üblicher Aufarbeitung erhält man 1-(4'-n-Pentyl-2,3-diflurorbiphenyl-4-yl)-2-(4-propylphenyl)-ethan.

Analog werden hergestellt:

1-(4'-Pentyl-2,3-difluorbiphenyl-4 -yl)-2-(4-ethylphenyl)-ethan
1-(4'-Pentyl-2,3-difluorbiphenyl-4 -yl)-2-(4-butylphenyl)-ethan
1-(4'-Pentyl-2,3-difluorbiphenyl-4 -yl)-2-(4-pentylphenyl)-ethan
1-(4'-Pentyl-2,3-difluorbiphenyl-4 -yl)-2-(4-hexylphenyl)-ethan
1-(4'-Pentyl-2,3-difluorbiphenyl-4 -yl)-2-(4-heptylphenyl)-ethan
1-(4'-Pentyl-2,3-difluorbiphenyl-4 -yl)-2-(4-octylphenyl)-ethan
1-(4'-Propyl-2,3-difluorbiphenyl-4 -yl)-2-(4-ethylphenyl)-ethan
1-(4'-Propyl-2,3-difluorbiphenyl-4 -yl)-2-(4-butylphenyl)-ethan
1-(4'-Propyl-2,3-difluorbiphenyl-4 -yl)-2-(4-pentylphenyl)-ethan
1-(4'-Propyl-2,3-difluorbiphenyl-4 -yl)-2-(4-hexylphenyl)-ethan
1-(4'-Propyl-2,3-difluorbiphenyl-4 -yl)-2-(4-heptylphenyl)-ethan
1-(4'-Propyl-2,3-difluorbiphenyl-4 -yl)-2-(4-octylphenyl)-ethan

Beispiel 10

Aus 0,1 mol 3-Pentyl-1,2-difluorbenzol und 0,1 mol 4-(2-(4-Propylphenyl)-ethyl)-cyclohexanon erhält man analog Beispiel 1 1-(4-Propylphenyl)-2-(4'-pentyl-2',3'-difluorbiphenyl-4-yl)-ethan.

Analog werden hergestellt:

1-(4-Propylphenyl)-2-(4'-ethyl-2',3'-difluorbiphenyl-4-yl)-ethan
1-(4-Propylphenyl)-2-(4'-propyl-2',3'-difluorbiphenyl-4-yl)-ethan
1-(4-Propylphenyl)-2-(4'-butyl-2',3'-difluorbiphenyl-4-yl)-ethan
1-(4-Propylphenyl)-2-(4'-hexyl-2',3'-difluorbiphenyl-4-yl)-ethan
1-(4-Propylphenyl)-2-(4'-heptyl-2',3'-difluorbiphenyl-4-yl)-ethan
1-(4-Propylphenyl)-2-(4'-octyl-2',3'-difluorbiphenyl-4-yl)-ethan
1-(4-Pentylphenyl)-2-(4'-ethoxy-2',3'-difluorbiphenyl-4-yl)-ethan, K 63,7° N 101,2° I
1-(4-Pentylphenyl)-2-(4'-propyl-2',3'-difluorbiphenyl-4-yl)-ethan
1-(4-Pentylphenyl)-2-(4'-butyl-2',3'-difluorbiphenyl-4-yl)-ethan
1-(4-Pentylphenyl)-2-(4'-hexyl-2',3'-difluorbiphenyl-4-yl)-ethan
1-(4-Pentylphenyl)-2-(4'-heptyl-2',3'-difluorbiphenyl-4-yl)-ethan
1-(4-Pentylphenyl)-2-(4'-octyl-2',3'-difluorbiphenyl-4-yl)-ethan

Die folgenden Beispiele betreffen erfindungsgemäße flüssigkristalline Medien:

Beispiel A

Ein flüssigkristallines Medium bestehend aus

7 % 2-p-Heptyloxyphenyl-5-octylpyrimidin,
11 % 2-p-Octyloxyphenyl-5-octylpyrimidin,
6 % 2-p-Hexyloxyphenyl-5-nonylpyrimidin,
14 % 2-p-Nonyloxyphenyl-5-nonylpyrimidin,
5 % 4'-Octyl-2,3-difluor-4-octyloxybiphenyl,
7 % 4'-Nonyl-2,3-difluor-4-nonyloxybiphenyl,
8 % 4-Pentyloxy-2,3-difluorbiphenyl-4'-carbonsäure-(p-hexylphenylester),
20 % r-1-Cyan-cis-4-(4'-octyloxybiphenyl-4-yl)-1-octyl-cyclohexan,
12 % r-1-Cyan-cis-4-(4'-octylbiphenyl-4-yl)-1-butyl-cyclohexan und
10 % optisch aktivem 2-Cyan-2-methylhexansäure-[p-(5-heptyl-pyrimidin-2-yl)-phenyl]-ester

zeigt $S_c^*$ 59° $S_A$ 61° Ch 78° I und eine Spontanpolarisation von 18 nC/cm bei Raumtemperatur.

Beispiel B

Ein nematisches Flüssigkristallmedium bestehend aus
10 % p-trans-4-Ethylcyclohexyl-benzonitril,
14 % p-trans-4-Propylcyclohexyl-benzonitril,
11 % p-trans-4-Butylcyclohexyl-benzonitril,
19 % p-trans-4-Pentylcyclohexyl-benzonitril,
9 % 1-(trans-4-Propylcyclohexyl)-2-(4'-ethoxy-2',3'-difluorbiphenyl-4-yl)-ethan,
8 % 1-(trans-4-Propylcyclohexyl)-2-(4'-pentyloxy-2', 3'-difluorbiphenyl-4-yl)-ethan,
3 % 4,4'-Bis-(trans-4-propylcyclohexyl)-biphenyl,
5 % 4-(trans-4-pentylcyclohexyl)-4'-(trans-4-propylcyclohexyl)-biphenyl,
2 % trans, trans-4-Propylcyclohexylcyclohexan-4'-carbonsäure-(trans-4-propylcyclohexylester),
3 % trans, trans-4-Butylcyclohexylcyclohexan-4'-carbonsäure-(trans-4-propylcyclohexylester),
5 % trans-4-Pentylcyclohexancarbonsäure-(4'-pentyl-2,3-difluorbiphenyl-4-yl-ester),
6 % trans-4-Propylcyclohexancarbonsäure-(trans-4-propylcyclohexylester) und
5 % trans-4-Pentylcyclohexancarbonsäure-(trans-4-propylcyclohexylester)
zeichnet sich durch einen breiten Arbeitstemperaturbereich, niedrige Doppelbrechung und niedrige Schwellenspannung aus.

Beispiel C

Ein flüssigkristallines Medium bestehend aus
16,87 % 4-Heptyl-2-fluorphenyl 4'-heptyloxybiphenyl-4-ylcarboxylat
16,87 % 4-Heptyl-2-fluorphenyl 4'-heptyloxy-2'-fluorbiphenyl-4-ylcarboxylat
16,87 % 4-Octyl-2-fluorphenyl 4'-octyloxy-2'-3'-difluorbiphenyl-4-ylcarboxylat
14 % 4-Octyloxy-3-fluorphenyl 4-octyloxybenzoat
14 % 4-Hexyloxy-3-fluorphenyl 4-octyloxybenzoat
10 % 4-Octyloxy-2-fluorphenyl 4-pentylbenzoat
9 % 4-Heptyl-3-fluorphenyl 4'-octyloxy-2',3'-difluorbiphenyl-4-ylcarboxylat und
2,4 % chiralem 1-Cyano-2-methylpropyl 4'-octyloxybiphenyl-4-ylcarboxylat
zeigt $S_C^*$ 71,8° $S_A$ 81° Ch 103,8° I und eine hohe Spontanpolarisation.

**Patentansprüche**

**1.** Verbindungen der Formel I

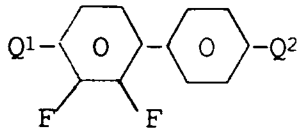

I

mit 2, 3 oder 4 Ringen
worin

| | |
|---|---|
| $Q^1$ und $Q^2$ | jeweils unabhängig voneinander R oder R-$A^1$-$A^2$-Z bedeuten, wobei |
| R | jeweils unsubstituiertes, einfach durch Cyan oder mindestens einfach durch Fluor oder Chlor substituieres Alkyl mit 1-15 C-Atomen oder Alkenyl mit 3-15 C-Atomen, worin auch jeweils eine oder zwei nicht benachbarte $CH_2$-Gruppen durch -O-, -CO-, -O-CO-, -CO-O-oder -O-COO- ersetzt sein können, |
| Z | -COO-, -O-CO-, $-CH_2O-$, $-O-CH_2-$, $-CH_2CH_2-$ oder eine Einfachbindung, und |
| $A^1$ und $A^2$ | jeweils unabhängig voneinander unsubstituiertes oder durch ein oder zwei Fluor substituiertes 1,4-Phenylen, oder trans-1,4-Cyclohexylen, und eine der beiden Gruppen $A^1$ und $A^2$ auch eine Einfachbindung sein kann, |

mit der Maßgabe, daß Z -CO-O-, -O-CO-, $-CH_2O-$, $-OCH_2-$ oder $-CH_2CH_2-$ ist, falls eine der Gruppen $Q^1$ oder $Q^2$ Alkyl oder Alkoxy und die andere Gruppe $Q^1$ oder $Q^2$ R-$A^1$-$A^2$-Z bedeutet, worin eine der beiden Gruppen $A^1$ und $A^2$ eine Einfachbindung ist.

**2.** Difluorbiphenyle der Formeln Ia und Ib,

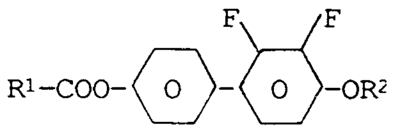

Ia

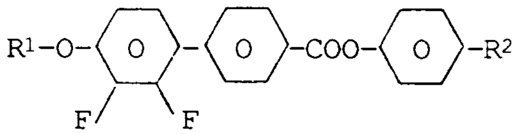

Ib

worin

$R^1$ und $R^2$ jeweils unabhängig voneinander Alkyl mit 1-15 C-Atomen bedeutet.

**3.** Verfahren zur Herstellung von Verbindungen der Formel I nach Anspruch 1, dadurch gekennzeichnet, daß man eine Verbindung, die an Stelle von C-C-Bindungen H-Atome enthält, mit einem oxidierenden Mittel behandelt, oder daß man zur Herstellung von Ester (worin Z -CO-O-oder -O-CO- bedeutet und/oder in R mindestens eine $CH_2$-Gruppe ersetzt ist) eine entsprechende Carbonsäure oder eines ihrer reaktionsfähigen Derivate mit einem entsprechenden Alkohol oder einem seiner reaktionsfähigen Derivate umsetzt,
oder daß man zur herstellung von Ethern (woran Z $-CH_2O-$ oder $-OCH_2-$ bedeutet und/oder in R mindestens eine $CH_2$-Gruppe durch -O- ersetzt ist) eine entsprechende Hydroxyverbindung verethert.

**4.** Zwischenprodukte der Formel Ic und Id zur Herstellung der Verbindungen der Formel I:

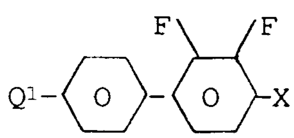

Ic

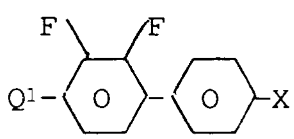

Id

worin $Q^1$ die angegebene Bedeutung besitzt und X OH, COOH oder Halogen bedeutet.

**5.** 2,3-Difluorbiphenyle der Formel Ie,

$R-BPF_2-R$ Ie

worin R jeweils unabhängig die in Anspruch 1 gegebene Bedeutung besitzt und $BPF_2$ eine Gruppe der Formel

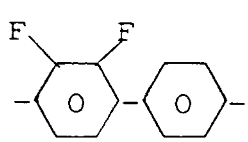

bedeutet.

**6.** Verwendung der Derivate nach Anspruch 1 als Komponenten flüssigkristalliner Medien.

**7.** Flüssigkristallines Medium mit mindestens zwei flüssigkristallinen Komponenten, dadurch gekennzeichnet, daß mindestens eine Komponente ein Derivat nach Anspruch 1 ist.

**8.** Elektrooptisches Anzeigeelement, dadurch gekennzeichnet, daß es als Dielektrikum ein Medium nach Anspruch 7 enthält.

**Claims**

**1.** Compounds of the formula I

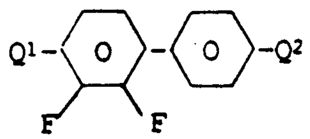

I

having 2, 3 or 4 rings wherein

$Q^1$ and $Q^2$ independently of one another are each R or R-$A^1$-$A^2$-Z in which

R is alkyl having 1-15 C atoms or alkenyl having 3-15 C atoms each of which is unsubstituted or monosubstituted by cyano or at least monosubstituted by fluorine or chlorine, and in which in each case one or two non-adjacent $CH_2$ groups can also be replaced by -O-, -CO-, -O-CO-, -CO-O- or -O-COO-,

Z is -COO-, -O-CO-, $-CH_2O-$, $-O-CH_2-$, $-CH_2CH_2-$ or a single bond, and

$A^1$ and $A^2$ independently of one another are each 1,4-phenylene which is unsubstituted or substituted by one or two fluorine atoms, or are trans-1,4-cyclohexylene, and one of the two groups $A^1$ and $A^2$ can also be a single bond,

subject to the proviso that Z is -CO-O-, -O-CO-, $-CH_2O-$, $-OCH_2-$ or $-CH_2CH_2-$, if one of the groups $Q^1$ or $Q^2$ is alkyl or alkoxy and the other group $Q^1$ or $Q^2$ is R-$A^1$-$A^2$-Z wherein one of the two groups $A^1$ and $A^2$ is a single bond.

**2.** Difluorobiphenyls of the formulae Ia and Ib

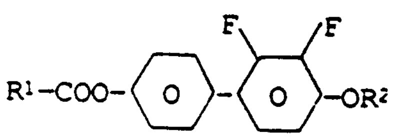

Ia

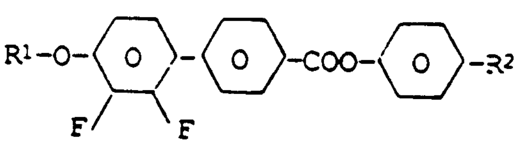

Ib

wherein

$R^1$ and $R^2$ independently of one another are each alkyl having 1-15 C atoms.

**3.** Process for the preparation of compounds of the formula I according to Claim 1, characterised in that a compound which contains H atoms instead of C-C bonds is treated with an oxidising agent, or, in order to prepare ester[sic] (wherein Z is -CO-O- or -O-CO- and/or at least one $CH_2$ group in R has been replaced), the corresponding carboxylic acid or one of its reactive derivatives is reacted with a suitable alcohol or one of its reactive derivatives, or, in order to prepare ethers (wherein Z is $-CH_2O-$ or $-OCH_2-$ and/or at least one $CH^2$ group in R has been replaced by -O-), a suitable hydroxy compound is etherified.

**4.** Intermediate products of the formula Ic and Id, for the preparation of compounds of the formula I:

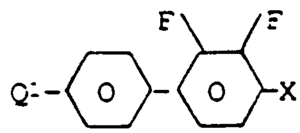

Ic

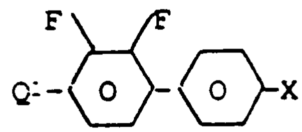

Id

wherein $Q^1$ has the meaning indicated and X is OH, COOH or halogen.

**5.** 2,3-difluorobiphenyls of the formula Ie,

$R\text{-}BPF_2\text{-}R$ Ie

in which each R has, independently of the other, the meaning indicated in Claim 1, and $BPF_2$ is a group of the formula

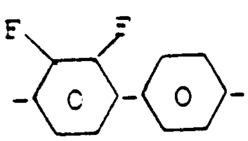

**6.** Use of the derivatives according to Claim 1 as components of liquid-crystal media.

**7.** Liquid-crystal media having at least two liquid-crystal components, characterised in that at least one component is a derivative according to Claim 1.

**8.** Electrooptical display element characterised in that it contains, as the dielectric, a medium according to Claim 7.

## Revendications

**1.** Composés bi-, tri- ou tétracycliques de formule I :

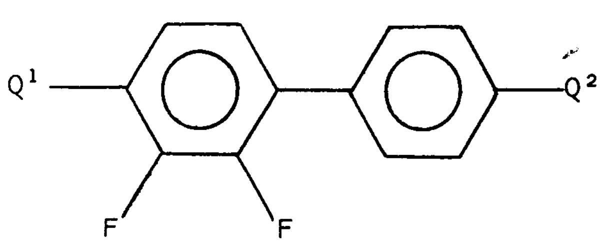

I

dans laquelle :

$Q^1$ et $Q^2$ représentent chacun, indépendamment l'un de l'autre, R ou $R\text{-}A^1\text{-}A^2\text{-}Z$ dans lesquels :

R représente dans chaque cas un groupe alkyle en $C_1$-$C_{15}$ ou alcényle en $C_3$-$C_{15}$, non substitué, monosubstitué par un groupe cyano ou au moins monosubstitué par le fluor ou le chlore, et dans lequel un ou deux groupes $-CH_2-$ non voisins peuvent être remplacés par -O-, -CO-, -O-CO-, -CO-O- ou -O-COO-,

Z représente -COO-, -O-CO-, $-CH_2O-$, $-O-CH_2-$, $-CH_2CH_2-$ou une liaison simple et
$A^1$ et $A^2$ représentent chacun, indépendamment l'un de l'autre, un groupe 1,4-phénylène non substitué ou substitué par un ou deux atomes de fluor, ou un groupe trans-1,4-cyclohexylène, l'un des deux symboles $A^1$ et $A^2$ pouvant également représenter une liaison simple,
sous réserve que Z représente -CO-O-, -O-CO-, $-CH_2O-$, $-OCH_2-$ ou $-CH_2CH_2-$ lorsque l'un des symboles $Q^1$ et $Q^2$ représente un groupe alkyle ou alcoxy et l'autre un groupe $R-A^1-A^2-Z$ dans lequel l'un des deux symboles $A^1$ et $A^2$ représente une liaison simple.

**2.** Difluorobiphényles de formules Ia et Ib :

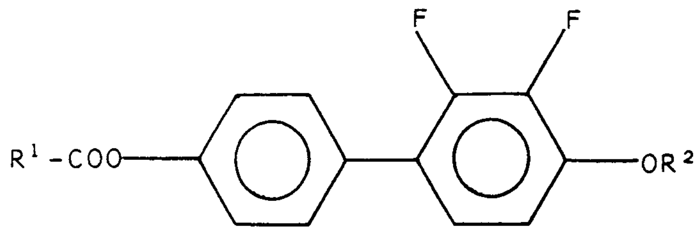

I a

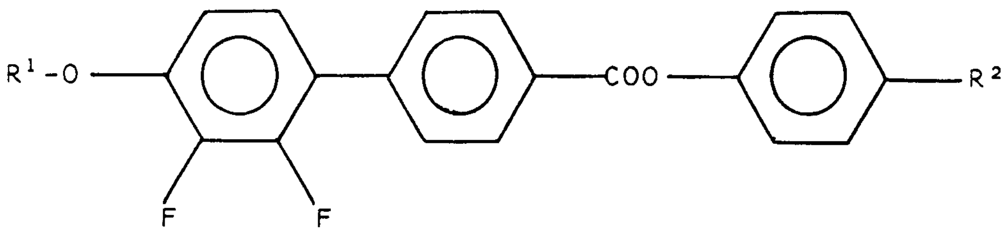

I b

dans lesquelles :
$R^1$ et $R^2$ représentent chacun, indépendamment l'un de l'autre, un groupe alkyle en $C_1$-$C_{15}$.

**3.** Procédé de préparation des composés de formule I de la revendication 1, caractérisé en ce que l'on traite par un agent oxydant un composé contenant des atomes d'hydrogène à la place de liaison C-C,
ou bien, pour la préparation des esters (pour lesquels Z représente -CO-O- ou -O-CO- et/ou au moins un groupe $-CH_2-$ de R est remplacé) on fait réagir un acide carboxylique correspondant ou l'un de ses dérivés réactifs avec un alcool correspondant ou l'un de ses dérivés réactifs ;
ou bien, pour la préparation des éthers (pour lesquels Z représente $-CH_2O-$ ou $-OCH_2-$ et/ou au moins un groupe $-CH_2-$ de R est remplacé par -O-) on éthérifie un dérivé hydroxylé correspondant.

**4.** Produits intermédiaires de formules Ic et Id pour la préparation des composés de formule I :

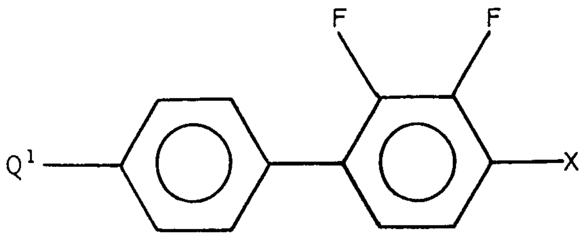

Ic

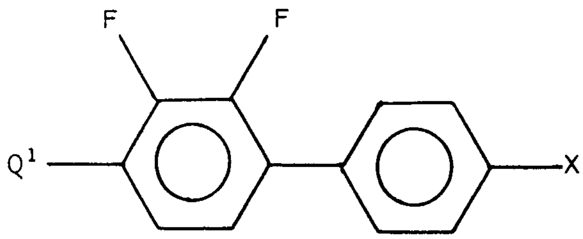

Id

dans lesquelles $Q^1$ a les significations indiquées ci-dessus et X représente OH, COOH ou un halogène.

**5.** 2,3-difluorobiphényles de formule Ie :

$R-BPF_2-R$ Ie

dans laquelle chacun des symboles R a, indépendamment, les significations indiquées dans la revendication 1, et $BPF_2$ représente un groupe de formule :

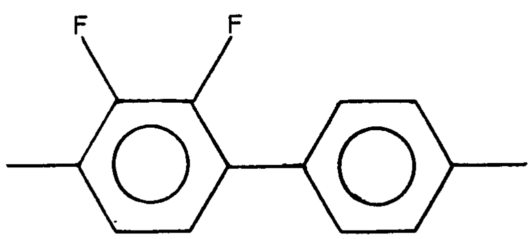

**6.** Utilisation des dérivés de la revendication 1 en tant que composants de milieux à cristaux liquides.

**7.** Milieu à cristaux liquides à au moins deux composants à cristaux liquides, caractérisé en ce que l'un au moins des composants est un dérivé de la revendication 1.

**8.** Elément d'affichage électro-optique, caractérisé en ce qu'il contient en tant que diélectrique un milieu selon la revendication 7.